# EUROPEAN PATENT SPECIFICATION

(11) **EP 0 468 673 B1**
(45) Date of publication and mention of the grant of the patent: **20.03.1996**
(21) Application number: 91306325.1
(22) Date of filing: 12.07.1991
(51) Int. Cl.: C08L 67/02, C08K 5/10

(54) **Polybutylene Terephthalate resin composition**
Polybutylen-Terephthalatharzmasse
Composition de résine téréphtalate de polybutylène

(30) Priority: 27.07.1990 JP 200966/90; 05.04.1991 JP 73050/91
(43) Date of publication of application: 29.01.1992
(73) Proprietor: POLYPLASTICS CO. LTD., Chuo-Ku Osaka-shi Osaka 541 (JP)
(72) Inventor: Mochizuki, Mitsuhiro, Fuji-shi, Shizuoka (JP); Wada, Mitsuo, Fuji-shi, Shizuoka (JP); Seitoh, Hiromitsu, Fuji-shi, Shizuoka (JP)
(74) Representative: Jackson, Peter

(56) References cited:
- DE-A- 2 531 963
- DE-B- 2 531 963
- US-A- 4 421 804
- US-A- 4 707 511
- DERWENT ACCESSION NO. 84-260 767, Questel Tele-systems (WPIL) DERWENT PUBLICATIONS LTD., London

## Description

The present invention relates to a polybutylene terephthalate resin composition. More particularly, it relates to a polybutylene terephthalate resin composition which is easily processable by injection molding techniques, due to the excellent mold release and extruder screw bite characteristics exhibited.

Polybutylene terephthalate (hereinafter abbreviated to "PBT") is a crystalline thermoplastic resin which is excellent in mechanical and electrical properties and other physical and chemical characteristics and therefore has been used as an engineering plastic in various fields including automobiles and electric and electronic appliances.

Although the molding of PBT is generally easier than that of polyethylene terephthalate (**PET**), the molding of PBT into a small article or one having a complicated shape or a thin wall causes various troubles such as distortion and breakage owing to poor mold release, so that there have been made attempts to improve the processability of PBT in molding by the addition of various mold release agents such as paraffin oil, fatty acid amides or fatty acid esters.

However, a PBT composition containing such a conventional mold release agent exhibits problems during molding which are manifest as a poor bite of the extruder screw into pellets of the composition and the occurrence of slipping on the screw in the molding machine. This slipping presumably occurs because of bleed-through of the mold release agent in a pre-drying step prior to the molding step, and it makes prolonged stable series molding thereof impossible, even though the composition is improved in mold release performances.

Although the reuse of molding scraps in order to reduce the production cost of a molded article is desirable and often done in these days, the problem of a poor bite in the extruder becomes more serious when this is done, and a solution to the problem has been eagerly sought. Although the problem is solved to some extent by the deposition of a metal soap on the surface of the pellet, this means is yet insufficient and gives rise to problems in complicating the operation, in the atmosphere of a molding plant, in the corrosion of metal and so on.

In view of these demands, the inventors of the present invention have intensively studied to obtain a polybutylene terephthalate resin composition which exhibits excellent mold release characteristics and which is freed from the troubles caused by the poor bite into the pellets in injection molding to make a prolonged stable molding thereof possible, and have accomplished the present invention.

Namely, the present invention relates to a polybutylene terephthalate resin composition comprising
(A) 100 parts by weight of a polybutylene terephthalate
   and
(B) 0.01 to 10 parts by weight of a sorbitan ester of a fatty acid having at least 12 carbon atoms.

The constituents of the composition according to the present invention will now be described in more detail.

First, the PBT resin (A) to be used in the present invention is a polybutylene terephthalate prepared by the polycondensation of 1,4-butanediol with terephthalic acid or an ester thereof with a lower alcohol or is a copolymer containing at least 70% by weight of polybutylene terephthalate. The comonomer includes dibasic acid components other than terephthalic acid or lower alcohol esters thereof, for example, aliphatic and aromatic polybasic acids such as isophthalic, naphthalenedicarboxylic, adipic, sebacic, trimellitic and succinic acids and ester-forming derivatives thereof; aromatic hydroxy carboxylic acids such as hydroxybenzoic and hydroxynaphthoic acids and ester-forming derivatives thereof; and glycol components other than 1,4-butanediol, for example, conventional alkylene glycols such as ethylene glycol, diethylene glycol, propylene glycol, trimethylene glycol, hexamethylene glycol, neopentyl glycol and cyclohexanedimethanol; lower alkylene glycols such as 1,8-octanediol; aromatic alcohols such as bisphenol A and 4,4'-dihydroxybiphenyl; alkylene oxide/alcohol adducts such as adduct of bisphenol A with two ethylene oxide molecules and adduct of bisphenol A with two propylene oxide molecules; and polyhydroxy compounds such as glycerol and pentaerythritol and ester-forming derivatives thereof.

Although all of the polybutylene terephthalates prepared by the polycondensation of the monomers as described above may be used as the component (A) according to the present invention either alone or as a mixture of two or more of them, it is preferable to use polybutylene terephthalate or a mixture comprising it as a major component. Further, a branched PBT polymer which is one of PBT copolymers may be used. The term "branched PBT polymer" used in this specification refers to a polybutylene terephthalate or polyester mainly composed of butylene terephthalate units which has a branch formed by the additional use of a polyfunctional compound. The polyfunctional compound includes trimesic, trimellitic and pyromellitic acids, alcohol esters thereof; and glycerol, trimethylolethane, trimethylolpropane and pentaerythritol.

The sorbitan ester (B) to be used in the present invention is an ester of sorbitan with a fatty acid having at least 12 carbon atoms. Examples of the fatty acid constituting the ester (B) include lauric, oleic, palmitic, stearic, behenic and montanic acids It is preferable to use a fatty acid having 16 to 32 carbon atoms, still preferably 18 to 22 carbon atoms. When a fatty acid having less than 12 carbon atoms is used, the mold release characteristics will be hardly improved, while when one having more than 32 carbon atoms is used, the heat resistance will lower unfavorably.

The sorbitan ester (B) to be used in the present invention can be prepared by a process known per se. It is desirable that the esterification be controlled so as to give an ester having a hydroxyl number of 50 or above but below 400, preferably 100 to 300, still preferably 150 to 300 as determined by the method which will be described. When the hydroxyl number is less than 50, the resulting pellets will suffer from the bleed-through of the sorbitan ester in drying to make the metering time scatter during a prolonged molding operation, thus failing in achieving stable molding unfavorably. On the contrary, when the hydroxyl number is 400 or above, the heat resistance will lower unfavorably.

Preferable examples of the sorbitan ester include monopalmitate, monostearate, distearate, tristearate, monobehenate, dibehenate, tribehenate and monomontanate; among which esters of sorbitan with stearic or behenic acid, i.e., sorbitan monostearate, sorbitan distearate, sorbitan monobehenate and sorbitan dibehenate are still preferable.

The amount of the component (B) is 0.01 to 10 parts by weight, preferably 0.1 to 2 parts by weight per 100 parts by weight of the component (A). If the amount is too small, the resulting composition will be poor in the effect of improving the bite into pellets, while if it is too large, the mechanical properties will lower unfavorably.

The composition of the present invention may further contain a small amount of other thermoplastic resin as an auxiliary component, as far as the object of the present invention is not hindered. The thermoplastic resin to be auxiliarily used may be any one as far as it is stable at high temperature.

Examples of such a thermoplastic resin include polyamide, ABS, polyphenylene oxide, polyalkyl acrylate, polyacetal, polysulfone, polyether sulfone, polyether imide, polyether ketone, fluororesin and polyethylene terephthalate. These thermoplastic resins may be used also as a mixture of two or more of them.

Further, the composition of the present invention may contain additives which are conventionally added to thermoplastic resins in order to impart the characteristics desired depending upon the object. Examples of such additives include stabilizers such as antioxidant, heat stabilizer and ultraviolet absorber, antistatic agent, flame retardant, coloring agents such as dye and pigment, lubricant, plasticizer, crystallization accelerator, nucleating agent and inorganic filler.

Examples of the inorganic filler include conventional inorganic fibers such as glass fiber, carbon fiber, ceramic fiber, boron fiber, potassium titanate fiber and asbestos fiber; powdery materials such as calcium carbonate, highly dispersible silicate, alumina, aluminum hydroxide, talc, clay, mica, glass flake, glass powder, glass bead, quartz powder, siliceous sand, wollastonite, carbon black, barium sulfate, plaster of Paris, silicon carbide, alumina, boron nitride and silicon nitride; flaky inorganic materials and whiskers. These inorganic fillers may be used either alone or as a mixture of two or more of them.

The composition of the present invention can be easily prepared by a conventional process for the preparation of a resin composition with conventional equipment therefor. For example, the composition can be prepared by any process selected from among (i) one which comprises mixing necessary components together, kneading and extruding the obtained mixture into pellets with an extruder and molding the pellets, (ii) one which comprises preparing some kinds of pellets different from each other in composition, mixing the pellets with each other at a predetermined ratio and molding the obtained pellet mixture to obtain a molded article having the objective composition according to the present invention and (iii) one which comprises directly feeding one or more of necessary components into a molding machine. Further, it is effective in blending necessary components homogeneously that a part of the resin components be preliminarily pulverized and thereafter mixed with the rest of the components.

As described above, the polybutylene terephthalate resin composition of the present invention containing a specific sorbitan ester is superior to those of the prior art containing various lubricating oils or fatty acid amides incorporated for the same purpose as that of the present invention in respect of the bite into pellets in molding and the excellent bite does not deteriorate even in reuse. Accordingly, the composition of the present invention can be stably molded for a prolonged period of time and is excellent in mold release characteristics, thus being an extremely desirable molding composition.

By virtue of the effects described above, the composition of the present invention is favorably usable for a part having a thin wall or a complicated shape, for example, various gears or connectors of automobiles or electric appliances.

### [Example]

The present invention will now be described in more detail by referring to the following Examples. Examples 1 to 7 and Comparative Examples 1 to 3

Various sorbitan esters were each added to polybutylene terephthalate at a ratio specified in Table 1. The obtained mixtures were each melt-kneaded with a twin-screw extruder to give pellets. The pellets were injection-molded into test pieces, followed by the evaluation of the test pieces.

For comparison, the same procedure as that described above was repeated except that no sorbitan ester was used or that a fatty acid amide or other fatty acid ester was used instead of the sorbitan ester. The results are given in Table 1.

The items and methods of the evaluation are as follows.

### ① hydroxyl number

determined by the analytical methods of the Japan Oil Chemists' Society: 2,4,9,2-71 hydroxyl number (pyridine-acetic anhydride method).

### ② evaluation of the extruder screw bite into the pellets (the scattering in metering time)

The molding of a box (D 75 mm × W 40 mm × H 40 mm × t 2 mm) was repeated under the conditions which will be described to measure the metering time (plasticizing time). A lower average value or a less scattering denotes a better screw bite into the pellets. The average, maximum and minimum values of 200-shot molding are given as the results.

The evaluation was conducted with respect to two kinds of pellets, i.e., the pellets prepared freshly and those containing 50% of reprocessed material (prepared by the pulverization of molded articles). Molding machine:

| Toshiba IS 30 EPN | | | | |
|---|---|---|---|---|
| Cylinder temp: | 260 - | 250 - | 240 - | 240°C |
| (nozzle) | (H3) | (H2) | (H1) | |
| mold temp.: | 60°C | | | |
| screw speed: | 160 rpm. | | | |

### ③ mold release characteristics

The same box as that prepared in the above item "evaluation on the bite into pellets' was molded under the same conditions as those employed therein and evaluated for the distortion caused by the ejection with a pin according to the following criteria:
- ○:: no distortion
- Δ:: slight distortion
- ×:: significant distortion

### ④ visual inspection of molded article (bleed-through of mold release agent)

A flat plate [50 mm x 50 mm x 3 mm (thickness)] was molded and aged at 120°C for 100 hours. The change in the surface of the plate due to bleed-through was examined with the naked eye and evaluated according to the following criteria:
1...no change in surface gloss
2...slightly lowered surface gloss
3...lowered surface gloss
4...lowered surface gloss with slight bleed-through
5...significant bleed-through (significantly lowered surface gloss)

### [Table 1]

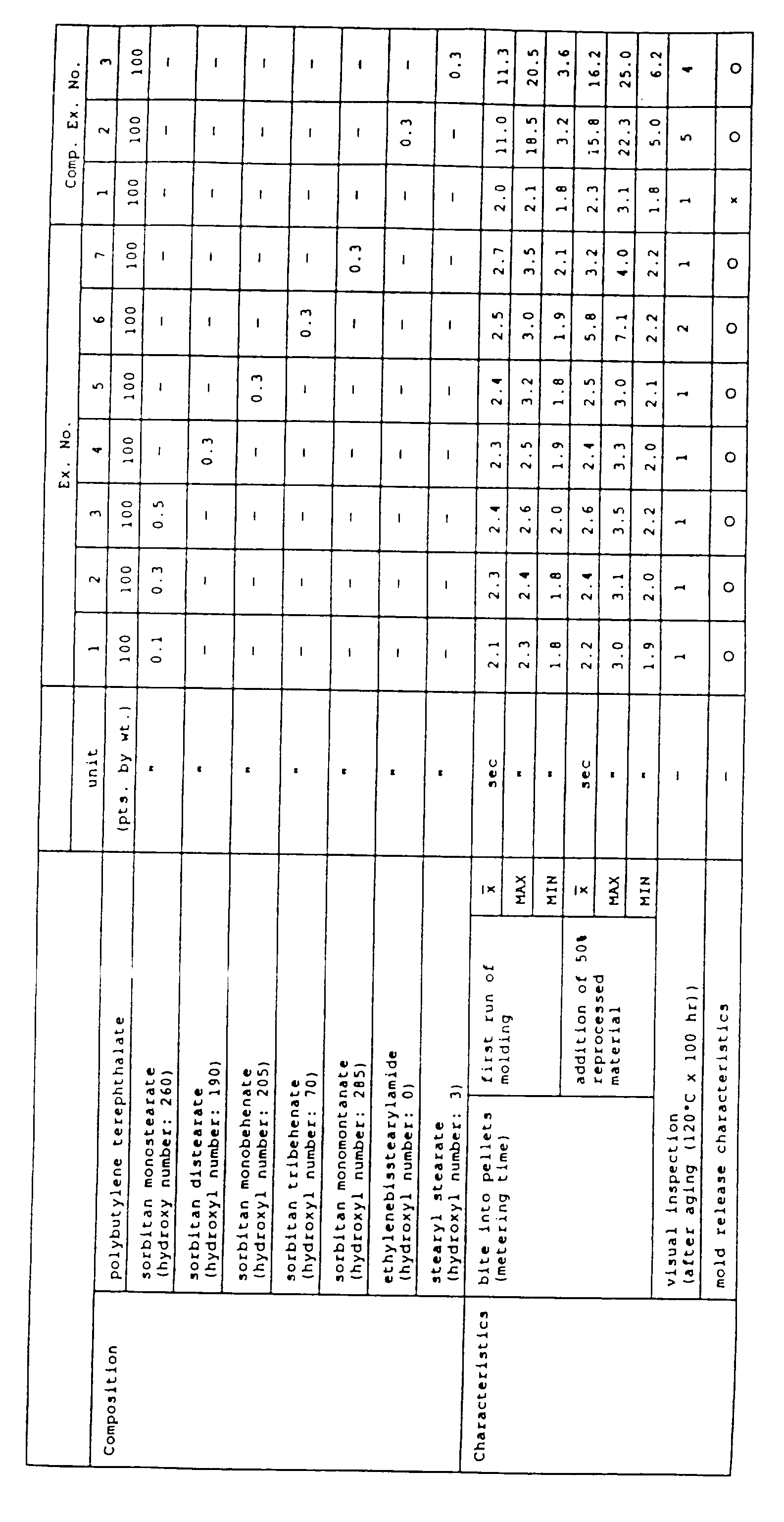

## Claims

1. A polybutylene terephthalate resin composition comprising
(A) 100 parts by weight of a polybutylene terephthalate and
(B) 0.01 to 10 parts by weight of a sorbitan ester of a fatty acid having at least 12 carbon atoms.

2. A polybutylene terephthalate resin composition as set forth in claim 1, wherein the sorbitan ester (B) has a hydroxyl number of 50 or above but below 400 as determined by the method described in this specification.

3. A polybutylene terephthalate resin composition as set forth in claim 1, wherein the sorbitan ester (B) has a hydroxyl number 150 or above but below 300 as determined by the method described in this specification.

4. A polybutylene terephthalate resin composition as set forth in any of claims 1 to 3, wherein the fatty acid constituting the component (B) is one having 16 to 32 carbon atoms.

5. A polybutylene terephthalate resin composition as set forth in any of claims 1 to 4, wherein the component (B) is an ester of sorbitan with stearic or behenic acid.

## Patentansprüche

1. Polybutylenterephthalatharz-Zusammensetzung, umfassend
(A) 100 Gewichtsteile eines Polybutylenterephthalats und
(B) 0,01 bis 10 Gewichtsteile eines Sorbitanesters einer Fettsäure mit wenigstens 12 Kohlenstoffatomen.

2. Polybutylenterephthalatharz-Zusammensetzung gemäß Anspruch 1, worin der Sorbitanester (B) eine Hydroxylzahl von 50 oder mehr, jedoch unter 400, hat, wie durch das Verfahren, das in dieser Patentschrift beschrieben ist, bestimmt ist.

3. Polybutylenterephthalatharz-Zusammensetzung gemäß Anspruch 1, worin der Sorbitanester (B) eine Hydroxylzahl von 150 oder mehr, jedoch unter 300, hat, wie durch das Verfahren, das in dieser Patentschrift beschrieben ist, bestimmt ist.

4. Polybutylenterephthalatharz-Zusammensetzung gemäß irgendeinem der Ansprüche 1 bis 3, worin die Fettsäure, die die Komponente (B) ausmacht, eine ist, die 16 bis 32 Kohlenstoffatome hat.

5. Polybutylenterephthalatharz-Zusammensetzung gemäß irgendeinem der Ansprüche 1 bis 4, worin die Komponente (B) ein Sorbitanester mit Stearin- oder Behensäure ist.

## Revendications

1. Une composition de résine de poly(téréphtalate de butylène) comprenant
(A) 100 parties en poids d'un poly(téréphtalate de butylène) et
(B) 0,01 à 10 parties en poids d'un ester de sorbitane d'un acide gras comptant au moins 12 atomes de carbone.

2. Une composition de résine de poly(téréphtalate de butylène) selon la revendication 1, dans laquelle l'indice d'hydroxyle de l'ester de sorbitane (B), tel que déterminé par la méthode exposée dans la description, est supérieur ou égal à 50 et inférieur à 400.

3. Une composition de résine de poly(téréphtalate de butylène) selon la revendication 1, dans laquelle l'indice d'hydroxyle de l'ester de sorbitane (B), tel que déterminé par la méthode exposée dans la description, est supérieur ou égal à 150 et inférieur à 300.

4. Une composition de résine de poly(téréphtalate de butylène) selon l'une quelconque des revendications 1 à 3, dans laquelle l'acide gras entrant dans la constitution du composant (B) compte 16 à 32 atomes de carbone.

5. Une composition de résine de poly(téréphtalate de butylène) selon l'une quelconque des revendications 1 à 4, dans laquelle le composant (B) est un ester de sorbitane de l'acide stéarique ou de l'acide béhénique.
